# EUROPEAN PATENT SPECIFICATION

(11) **EP 2 397 350 B1**
(45) Date of publication and mention of the grant of the patent: **15.01.2014**
(21) Application number: 11170075.3
(22) Date of filing: 16.06.2011
(51) Int. Cl.: B60H 1/00, G05G 1/08, G05G 5/03

(54) **Operating device**
Bedienungselement
Dispositif de fonctionnement

(30) Priority: 17.06.2010 JP 2010138202
(43) Date of publication of application: 21.12.2011
(73) Proprietor: KABUSHIKI KAISHA TOKAI RIKA DENKI SEISAKUSHO, Niwa-gun, Aichi 480-0195 (JP)
(72) Inventor: Hisada, Masahito, Aichi, 480-0195 (JP); Aoki, Yoshiyuki, Aichi, 480-0195 (JP)
(74) Representative: Grünecker, Kinkeldey, Stockmair & Schwanhäusser

(56) References cited:
- EP-A1- 1 707 410
- EP-A1- 1 742 240

## Description

### BACKGROUND

The present invention relates to a dial operating device.

In some operating devices for air conditioning of, for example, a vehicle, switching between inside air and outside air is carried out by a rotational operation of a dial. Such a device is provided with a dial as an operating member to be rotationally operated. The rotation of the dial is transmitted to a rotary unit such as a cable pulley, and thereby the inside air and the outside air are switched via a cable (see, e.g., JP-A-2005-96579).

EP 1 742 240 A1 describes also a device according to the preamble of claim 1.

In such an operating device having the above structure, in a case where the operating device does not have a click mechanism, the dial for rotating the rotary unit is liable to freely rotate. Therefore, it is necessary to hold the dial at a predetermined position for a while until the rotary unit (a cable pulley unit) is assembled to the operating device.

Consequently, it can be thought that, for example, two holding positions of the dial are provided in a rotational direction of the dial, the holding position where the dial is assembled to a base body is referred to as a first holding position, the holding position where the rotary unit is to be assembled is referred to as a second holding position, and thereby the dial is rotated from the first holding position to the second holding position in an inspecting process of an operation of the dial. Meanwhile, when the operating device is delivered to a customer, the rotary unit is not assembled to the operating device. The assembling of the rotary unit to the operating device is to be carried out by a delivery destination (a customer).

However, when the holding (engagement) of the dial at the second holding position loosens at a delivery destination of the operating device, the dial is sometimes rotated to the first holding position so as to be engaged and held at the first holding position. In the above state, the engaging and holding state at the first holding position is not readily released so that there is a possibility that the rotary unit could not be assembled to the operating device at the delivery destination.

### SUMMARY

The invention is made in view of the above circumstances, and the purpose of the invention is to provide an operating device that can prevent a dial from being engaged and held at a first holding position even when holding of the dial at a second holding position loosens and the dial is rotated in a direction toward the first holding position.

In order to achieve the above object, according to the present invention, there is provided an operating device comprising:
a base member;
a dial that is provided on the base member so as to be rotationally operated around an axis direction of the dial;
a dial holder that is coupled to the dial so as to be rotated together with the dial;
a first engagement portion and a second engagement portion that are arranged on the base member so as to be separated from each other along a rotational direction of the dial ;
an elastic engagement pawl that is provided on the dial holder and is elastically deformable, provisionally holds the dial holder together with the dial at a first holding position in a state that the elastic engagement pawl is engaged with the first engagement portion, and holds the dial holder together with the dial at a second holding position in a state that the elastic engagement pawl is engaged with the second engagement portion;
a stopper unit that is provided between the base member and the dial holder and restricts a rotation of the dial holder in a direction toward the first holding position;
a rotary unit that operates an operation target by its rotation when a rotation of the dial is transmitted to the rotary unit via the dial holder; and
an engagement releasing section that is provided on the rotary unit and elastically deforms the elastic engagement pawl so as to release the engagement of the elastic engagement pawl with the second engagement portion when the rotary unit is assembled to the dial holder in a state that the dial holder is positioned at the second holding position,
wherein in a case where the engagement of the elastic engagement pawl with the second engagement portion is released and the dial holder is rotated in the direction toward the first holding position from a state that the dial holder is positioned at the second holding position, the rotation of the dial holder in the direction toward the first holding position is restricted by the stopper unit and the elastic engagement pawl is elastically deformed so that the elastic engagement pawl is not able to be engaged with the first engagement portion.
Preferably, in the case where the engagement of the elastic engagement pawl with the second engagement portion is released and the dial holder is rotated in the direction toward the first holding position from the state that the dial holder is positioned at the second holding position, the elastic engagement pawl is elastically deformed so as to be inclined with respect to a face of the base member.
Preferably, the elastic engagement pawl is not elastically deformed in a state that the elastic engagement pawl is engaged with the first engagement portion at the first holding position.
Preferably, the stopper unit has a first stopper portion provided on the dial holder and a second stopper portion provided on the base member, and the first stopper portion is engaged with the second stopper portion in a state that the elastic engagement pawl is engaged with the first engagement portion at the first holding position.

In accordance with the configurations, in a case where the dial and the dial holder are assembled to the base member, the elastic engagement pawl of the dial holder is engaged with the first engagement portion so as to cause the dial and the dial holder to be held on the first holding position. In an inspection process of an operation of the dial, the engagement of the elastic engagement pawl to the first engagement portion is released, and the dial and the dial holder are rotationally moved to the second holding position so as to allow the elastic engagement pawl to be engaged with the second engagement portion of the base member, and thereby the dial and the dial holder are held on the second holding position. Usually, the operating device in the above state is delivered to a customer.

Assuming that the engagement of the elastic engagement pawl to the second engagement portion is released in a state in which the rotary unit is not yet assembled to the dial holder and the dial and the dial holder are rotated in a direction toward the first holding position, there is a possibility that the elastic engagement pawl is engaged with the first engagement portion, again. Regarding this point, in the invention, in a case where the engagement of the elastic engagement pawl to the second engagement portion loosens and the dial holder is rotated in a direction toward the first holding position, the rotation of the dial holder in the direction toward the first holding position is restricted by a stopper unit, and thereby the elastic engagement pawl is elastically deformed so that the elastic engagement pawl is not able to be engaged with the first engagement portion even when the elastic engagement pawl is moved to a position just before engagement with the first engagement portion. Consequently, it is possible to prevent the dial from being engaged and held on the first holding position even when the engagement of the dial on the second holding position loosens so as to allow the dial to be rotated in the direction toward the first holding position.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is an exploded perspective view showing an operating device according to an embodiment of the invention;
Fig. 2 is a front elevational view showing the operating device in an assembled state;
Fig. 3 is a front elevational view showing an insulator;
Fig. 4 is a perspective view showing an elastic engagement pawl;
Fig. 5 is a longitudinal cross-sectional view showing the operating device taken along line X1-X1 in Fig. 2 in a state in which a pulley unit is not yet assembled thereto;
Fig. 6 is a longitudinal cross-sectional view, corresponding to Fig. 5, showing the operating device in a state in which the pulley unit is assembled thereto;
Fig. 7 is a front elevational view showing the operating device in a state in which a dial holder is positioned on a first holding position (the elastic engagement pawl is engaged with a first engagement portion);
Fig. 8 is a front elevational view showing the operating device in a state in which the dial holder is positioned on a second holding position (the elastic engagement pawl is engaged with a second engagement portion);
Figs. 9A and 9B are schematic views showing the operating device in the state in which the dial holder is positioned on the first holding position (the elastic engagement pawl is engaged with the first engagement portion), wherein Fig. 9A is a front elevational view showing the insulator and Fig. 9B is a development cross sectional view showing the insulator and the dial holder in an area taken along line X2-X2 in Fig. 9A;
Figs. 10A and 10B are schematic views showing the operating device in the state in which the dial holder is positioned on the second holding position (the elastic engagement pawl is engaged with the second engagement portion), wherein Fig. 10A is a front elevational view corresponding to Fig. 9A and Fig. 10B is a development cross sectional view corresponding to Fig. 9B;
Fig. 11 is an explanatory view, corresponding to Fig. 9B, for explaining an action in a state in which the dial holder is rotated from the second holding position in a direction toward the first holding position; and
Fig. 12 is an elevational view showing an area around the second engagement portion for indicating an action when the elastic engagement pawl is in an over-stoking state at the second engagement portion.

### DETAILED DESCRIPTION OF EXEMPLARY EMBODIMENTS

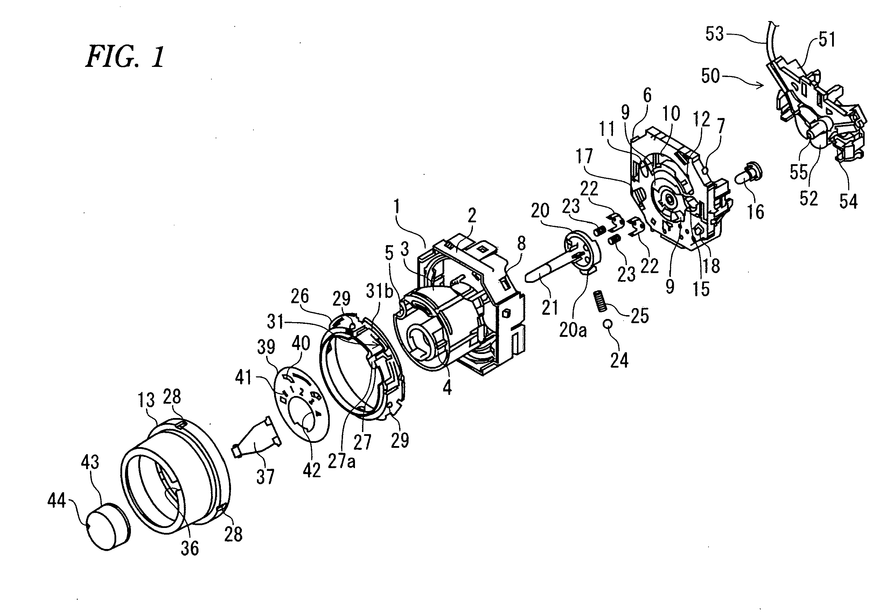

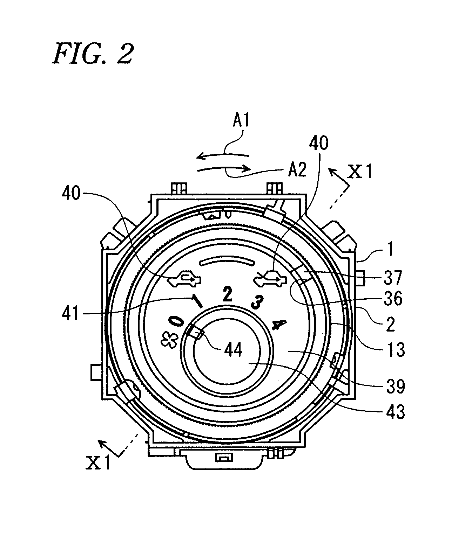

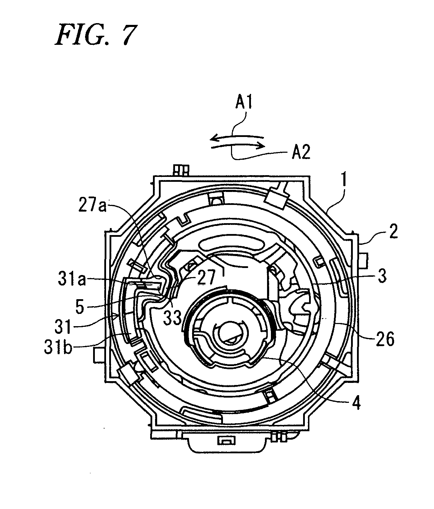

An operating device according to an embodiment of the invention is described below with reference to accompanying drawings. This embodiment is an example of the operating device for operating switching between inside air and outside air and for operating a blower switch in a vehicle, particularly an automobile. Fig. 1 is a schematic exploded perspective view showing an entirety of the operating device, and Fig. 2 is an elevational view showing the assembled state thereof. First, in Fig. 1, a body 1 is integrally formed with a main body section 2 having a frame shape, a cylinder section 3 having a cylindrical shape, and an inner-side cylinder section 4 provided in the cylinder section 3. The cylinder section 3 is provided so as to protrude in a front side at a substantially central portion of the main body section 2. The inner-side cylinder section 4 is eccentric from a center of the cylinder section 3 (see Fig. 7). A recessed portion 5 extending in an axial direction of the cylinder section 3 is formed on an outer circumferential portion of the cylinder section 3.

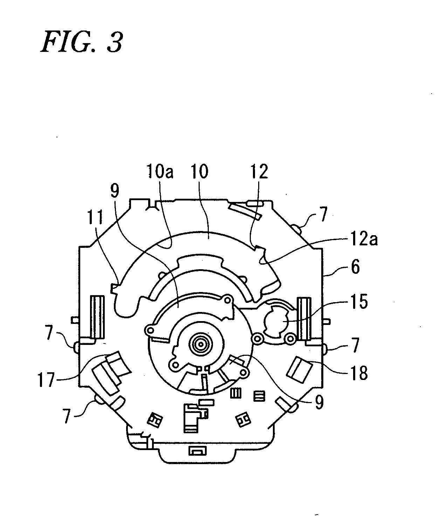

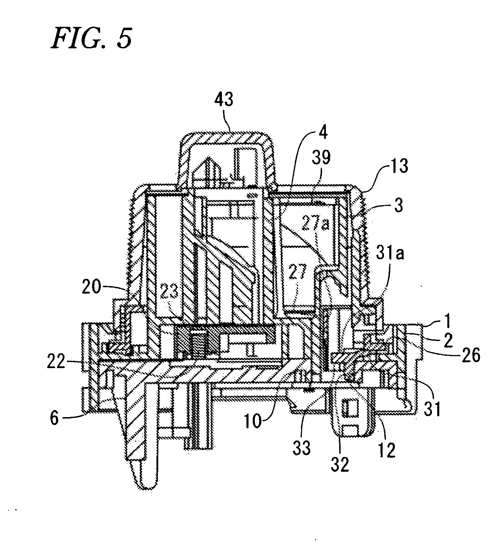

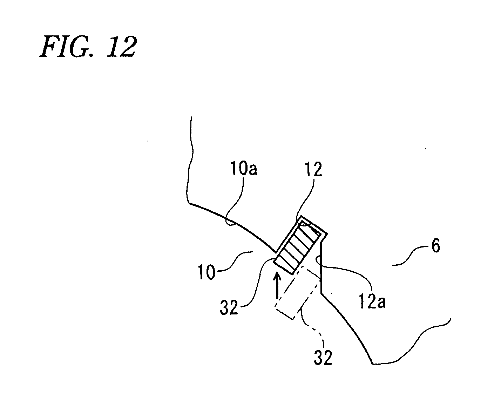

An insulator 6 forming a base member is provided at a back side of the body 1 (see Fig. 5). The insulator 6 is attached to the body 1 in a fixed state in such a manner that a plurality of engagement projected portions 7 provided on a circumferential portion of the insulator 6 are engaged with a plurality of engagement holes formed on the main body section 2 of the body 1. A plurality of fixed contacts 9 are provided in an area in the vicinity of a central portion of the insulator 6 at a front face. An opening portion 10 having an arc shape is formed on a portion near the outer circumferential portion of the insulator 6 (a portion near the upper part in Fig. 3). A first engagement portion 11 formed of a notch portion is provided on an edge part 10a at an outer circumferential side of the opening portion 10 at the left side in Fig. 3 and a second engagement portion 12 formed of a notch portion is also provided thereon at the right side in Fig. 3. The first engagement portion 11 and the second engagement portion 12 respectively communicate with the opening portion 10. The first engagement portion 11 and the second engagement portion 12 are separately arranged along a rotational direction of a dial 13 (described later). An inclined portion 12a (see Fig. 12) is formed on the second engagement portion 12 at a right side edge part.

In the insulator 6, a lamp attachment portion 15 is provided on a right side below the opening portion 10 and a lamp 16 is attached to the lamp attachment portion 15. A first stopper portion 17 made of a projection is provided on the front face of the insulator 6 and is positioned at the left side below the opening portion 10. A second stopper 18 also made of a projection is provided on the front face thereof and is positioned at the left side below the opening portion 10.

A contact holder 20 is provided between the body 1 and the insulator 6 (see Fig. 5). The contact holder 20 has a shaft 21 which forwardly protrudes. The shaft 21 is inserted into the inner-side cylinder portion 4 to be rotatable. Two movable contacts 22 and two springs 23 for respectively urging the movable contacts 22 in a direction toward the insulator 6 are attached to the contact holder 20. In association with rotational operation of the contact holder 20 centering around the shaft 21, each of the movable contacts 22 slides on the front face of the insulator 6 so as to be in contacted with or separated from the fixed contact 9. Here, a blower switch is configured by the fixed contacts 9 and the movable contacts 22.

A housing section 20a having an open outer circumferential portion is formed at a side part of the contact holder 20. A ball 24 for clicking and a spring 25 for urging the ball 24 to the outside are arranged in the housing section 20a. An irregularity portion for clicking (not shown) is provided on an inner circumference portion of the main body section 2 of the body 1. A clicking mechanism of the contact holder 20 is configured by the irregularity portion, the ball 24 for clicking and the spring 25. The clicking mechanism is adapted to hold the contact holder 20 at a position where the contact holder 20 is stopped when the contact holder 20 is rotationally operated to that position.

The dial holder 26 has a ring shape. The dial holder 26 has a projected portion 27 protruding to the inside. The dial holder 26 is attached to the cylinder section 3 so as to be rotatable around a base shaft portion of the cylinder section 3 in such a manner that the projected portion 27 is inserted into the recessed portion 5 of the cylinder section 3 in the body 1 and is shifted in a direction toward a base end portion of the cylinder section 3 (see Fig. 5). The dial 13 has a cylinder shape with a step. The dial 13 is attached to the dial holder 26 so as to be integrally rotatable together with the dial holder 26 in such a manner that a plurality of engagement holes 28 arranged on an outer circumferential portion at the rear side are engaged with a plurality of engagement projected portions 29 arranged on an outer circumferential portion of the dial holder 26. The dial 13 is provided at the outside of the cylinder section 3 so as to cover the cylinder section 3 (see Fig. 5). With this, by rotating the dial 13 around its center shaft, the dial holder 26 is integrally rotated together with the dial 13.

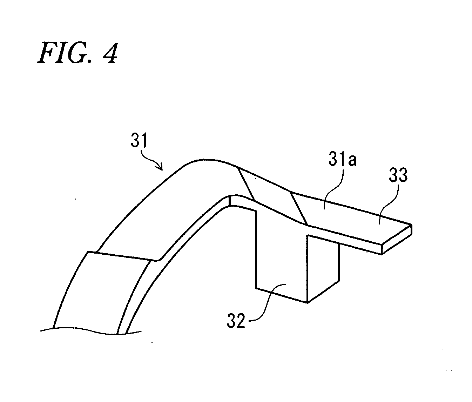

In the dial holder 26, a back side (the outer circumferential portion side) of the recessed portion 27 is formed to be a recessed portion 27a extending in the axial direction. A tip portion 31a of an elastic engagement pawl 31 is provided on the recessed portion 27a so as to be movable in the axial direction as shown in Fig. 7. The elastic engagement pawl 31 is so constituted that a base end portion 31 b is integrally coupled to the dial holder 26 and the elastic engagement pawl 31 extends from the base end portion 31 b along the circumferential direction of the dial holder 26. The base end portion 31 b of the elastic engagement pawl 31 is supported by the dial holder 26 in a cantilever fashion so that the tip portion 31a can be elastically deformable in the axial direction. An engagement projected portion 32 backwardly protruding and a reception portion 33 protruding in a direction toward a recessed portion 27a side are integrally formed on the tip portion 31a as shown in Fig. 4. Accordingly, the engagement projected portion 32 is formed so as to be engaged with the first engagement portion 11 and the second engagement portion 12 as described later. The engagement pawl 31 has an L-shape viewed from the front side as shown in Fig. 7.

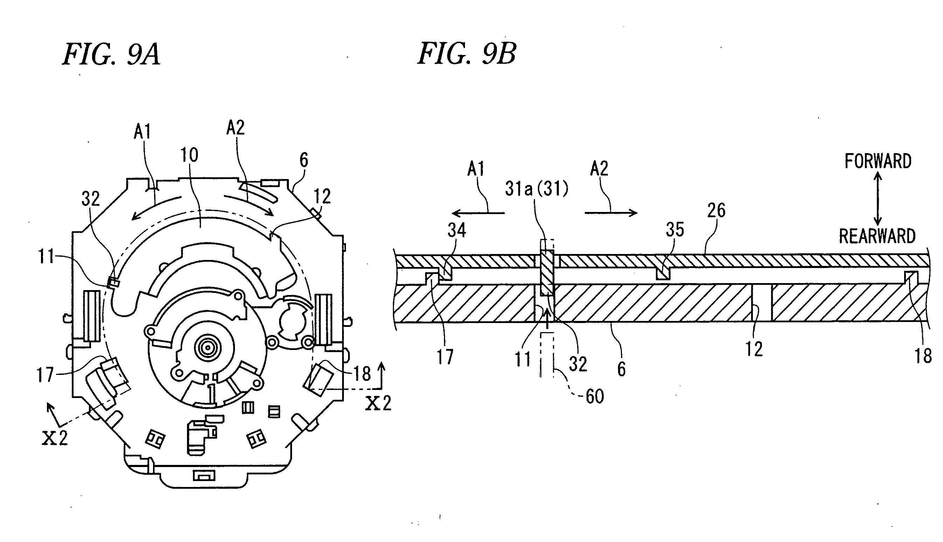

A first stopper portion 34 and a second stopper portion 35 are provided on the dial holder 26 at the rear face side thereof so that the engagement projected portion 32 of the elastic engagement pawl 31 is positioned between the first stopper portion 34 and the second stopper portion 35 in order to restrict a rotational range of the dial holder 26 (a rotational range of the dial 13) as shown in Fig. 9B. Each of the first stopper portion 34 and the second stopper portion 35 has a protruding shape. An indicator section attachment portion 36 having a recessed shape is provided at an inner circumferential portion of the dial 13, and an indicator section 37 made of a lens is attached to the indicator section attachment portion 36 (see Fig. 1).

A display panel 39 is attached to a front face portion of the cylinder section 3 of the body 1 to be in a fixed state. An inside/outside air switching display section 40 for displaying a switching state of inside air or outside air and a blower display section 41 for displaying a level of blowing air are provided on the display panel 39. An opening portion 42 is formed on the display panel 39 corresponding to the inner-side cylinder section 4. A knob 43 for blower is attached to a tip portion of the shaft 21 of the contact holder 20 through the opening portion 42. By rotationally operating the knob 43 for blower, the contact holder 20 is operated via the shaft 21, and thereby the blower switch is switched. The knob 43 for blower is provided with a single indicator section 44.

On the other hand, a pulley unit 50 is so configured that a cable pulley 52 as a rotary unit is rotatably attached to a unit base 51, and a cable 53 is wound around the cable pulley 52 (see Fig. 1). A tip portion of the cable 53 is connected to a damper (not shown) for switching between the inside air or outside air. An arm section 54 is integrally formed with the cable pulley 52 and a coupling shaft section 55 forwardly protruding is integrally formed with a tip portion of the arm section 54. The coupling shaft section 55 functions as an engagement releasing section.

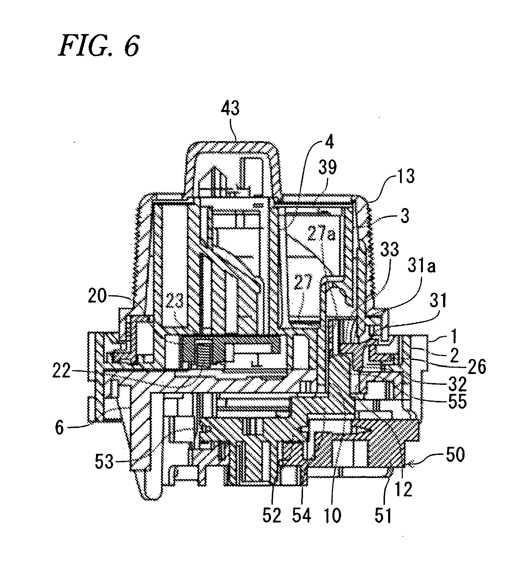

The pulley unit 50 is attached to the back side of the insulator 6 as shown in Fig. 6. In a state that the pulley unit 50 is attached thereto, a tip portion of the coupling shaft section 55 is inserted into the recessed portion 27a on the dial holder 26 through the opening portion 10 of the insulator 6. Accordingly, the rotation of the dial 13 is transmitted to the cable pulley 52 via the dial holder 26 and the coupling shaft section 55. In association with the rotational operation of the dial 13, the coupling shaft section 55 is moved along the arc shaped opening portion 10 of the insulator 6.

In the above configuration, the pulley unit 50 is to be assembled in a delivery destination. First, a case of assembling the operating device other than the pulley unit 50 is described below. In a state that the body 1 is placed in a state that a back side thereof is directed to upward, the shaft 21 of the contact holder 20 is inserted into the inner-side cylinder section 4, the spring 25 and the ball 24 for generating click feel are arranged in the housing section 20a of the contact holder 20, and then two movable contacts 22 and the springs 23 are assembled to the back face side of the contact holder 20. Next, the lamp 16 is attached to the lamp attachment portion 15 of the insulator 6. After that, the insulator 6 is placed at the back side of the body 1 and the projected portions 7 of the insulator 6 are engaged with the engagement holes 8 of the body 1, thereby the insulator 6 is assembled to the body 1. After that, the body 1 is placed in a state that the cylinder section 3 is directed to upward.

Next, the indicator section 37 is attached to the indicator section attachment portion 36 of the dial 13. After that, the engagement holes 28 of the dial 13 are engaged with the engagement projected portions 29 of the dial holder 26, thereby the dial 13 is assembled to the dial holder 26. Next, the recessed portion 27 of the dial holder 26 is inserted into the recessed portion 5 of the cylinder section 3 from the front side by handling the dial 13 so as to move the dial holder 26 and the dial 13 in a direction toward the base end of the cylinder section 3, and thereby the tip portion of the engagement projected portion 32 of the elastic engagement pawl 31 on the dial holder 26 is inserted into the first engagement portion 11 of the insulator 6 from the front side (see Figs. 9A and 9B).

Since the first stopper portion 34 of the dial holder 26 abuts the first stopper portion 17 of the insulator 6 from a direction of arrow A1 1 (a counterclockwise direction) as shown in Fig. 9B, the dial holder 26 (the dial 13) is not rotated anymore in the direction of arrow A1. Thus, since the tip portion of the engagement projected portion 32 of the elastic engagement pawl 31 is inserted into the first engagement portion 11 of the insulator 6 and is engaged therewith, the dial 13 and the dial holder 26 becomes a state that the dial 13 and the dial holder 26 are provisionally held at the first holding position. Fig. 7 indicates a state that the dial holder 26 is held at the first holding position. In Fig. 7, the dial 13 is not shown.

Next, the display panel 39 is attached to the front face of the cylinder section 3, and the knob 43 for blower is attached to the tip portion of the shaft 21. Thereby, provisionally assembling of the operating device is completed. In a case where inspection of the operation of the dial 13 is performed, a rod-shaped tool 60 (see a double dash line in Fig. 9B) is inserted into the opening portion 10 from the back side of the insulator 6, and thereby the reception portion 33 of the elastic engagement pawl 31 at the tip portion 31 a is forwardly pushed by the tip portion of the tool 60. Accordingly, the elastic engagement pawl 31 is elastically deformed and the tip portion of the engagement projected portion 32 is pulled out from the first engagement portion 11, thereby the engagement of the engagement projected portion 32 with the first engagement portion 11 can be released (see a double-dash line in Fig. 9B).

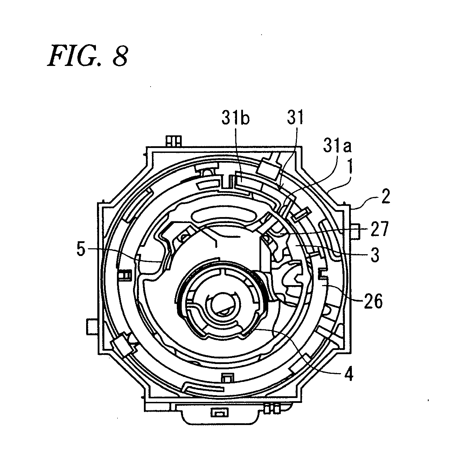

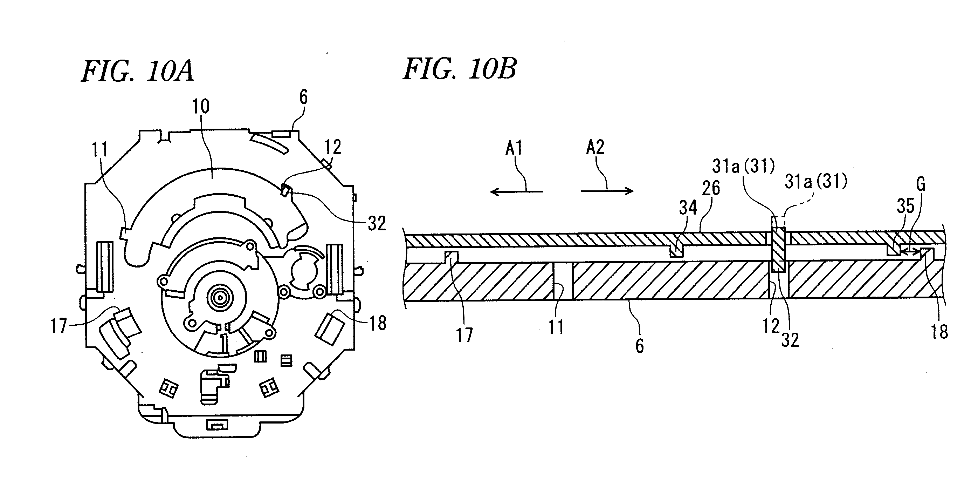

In the above state in which the engagement of the engagement projected portion 32 with the first engagement portion 11 is released, when the dial 13 (the dial holder 26) is rotated in a clockwise direction (a direction of arrow A2 in Figs. 7, 9A and 9B), the tip portion of the engagement projected portion 32 of the elastic engagement pawl 31 is moved in the direction of arrow A2 along an edge part of the opening portion 10 while abutting the front face of the insulator 6. When the tip portion of the engagement projected portion 32 reaches the second engagement portion 12, the tip portion thereof is engaged with the second engagement portion 12 (see Figs. 10A and 10B). At that time, the second stopper portion 35 at a dial holder 26 side does not abut the second stopper portion 18 at an insulator 6 side, and there is a small gap G between the second stopper portion 35 and the second stopper portion 18. Thus, since the tip portion of the engagement projected portion 32 of the elastic engagement pawl 31 is inserted into the second engagement portion 12 of the insulator 6 to be engaged thereto, the dial 13 and the dial holder 26 are in a state that they are held on the second holding position. Fig. 8 indicates a state that the dial holder 26 is held at the second holding position. In Fig. 8, also the dial 13 is not shown.

The operating device having the above configuration is delivered to a delivery destination in a state that the dial 13 and the dial holder 26 are held at the second holding position. In the delivery destination, the pulley unit 50 is assembled to the back side of the insulator 6. In a case where the pulley unit 50 is assembled to the back side of the insulator 6, the tip portion of the coupling shaft section 55 is inserted into the recessed portion 27a on the dial holder 26 through the opening portion 10 of the insulator 6 (see Fig. 6). At that time, the tip portion of the coupling shaft section 55 abuts the reception portion 33 integrated with the engagement projected portion 32 of the elastic engagement pawl 31 which is engaged with the second engagement portion 12 so as to forwardly push the reception portion 33. Accordingly, the tip portion 31a of the elastic engagement pawl 31 is elastically deformed and the engagement projected portion 32 is pulled out from the second engagement portion 12, thereby the engagement of the engagement projected portion 32 with the second engagement portion 12 can be released (see a double-dash line in Fig. 10B). In the above state, the rotation of the dial 13 in the direction A1 or in the direction A2 can be transmitted to the cable pulley 52 via the dial holder 26 and the coupling shaft section 55. The coupling shaft section 55 is moved along the arc shaped opening portion 10 of the insulator 6 in association with the rotational operation of the dial 13, and the damper is operated via the cable 53 in association with the rotation of the cable pulley 52, thereby switching between an inside air circulation state and an outside air introduction state is performed.

Here, in the state that the pulley unit 50 is not yet assembled to the operating device (in the state that the engagement projected portion 32 of the elastic engagement pawl 31 is engaged with the second engagement portion 12 as shown in Fig. 10B), assuming that the engagement of the engagement projected portion 32 with the second engagement portion 12 is released by any cause and the dial 13 and the dial holder 26 are rotated in a direction toward the first holding position (in the direction of arrow A1), there is a possibility that the engagement projected portion 32 of the elastic engagement pawl 31 is engaged with the first engagement portion 11, again.

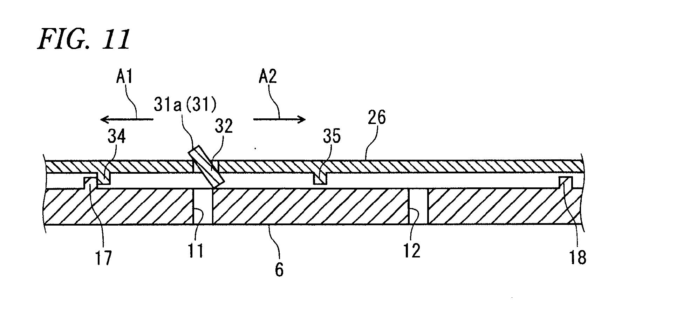

Regarding the above point, according to the embodiment, in a case where the engagement of the engagement projected portion 32 with the second engagement portion 12 loosens, and the dial 13 and the dial holder 26 are rotated in the direction toward the first holding position (in the direction of arrow A1), the tip portion of the engagement projected portion 32 slides on the front face of the insulator 6 while being in contact therewith in the direction of arrow A1. Consequently, the tip portion 31a of the elastic engagement pawl 31 is elastically deformed so that the engagement projected portion 32 is inclined with respect to the front face of the insulator 6 as shown in Fig. 11. In a state that the first stopper portion 34 at the dial holder 26 side abuts the first stopper portion 17 at the insulator 6 side so as to restrict the rotation of the dial holder 26 in the direction toward the first holding position (in the direction of arrow A1), the engagement projected portion 32 of the elastic engagement pawl 31 is not able to be engaged with the first engagement portion 11 even when the engagement projected portion 32 is moved to a position just before engagement with the first engagement portion 11. Consequently, it is possible to prevent the dial 13 and the dial holder 26 from being engaged and held on the first holding position even when the engagement of the engagement projected portion 32 with the second engagement portion 12 on the second holding position loosens and the dial 13 and the dial holder 26 are rotated in the direction toward the first holding position.

In the above case, the first stopper portion 17 at the insulator 6 side and the first stopper portion 34 at the dial holder 26 side constitute a stopper unit that restricts the dial 13 and the dial holder 26 so as not to rotate them anymore in the direction toward the first holding position (in the direction of arrow A1) when the dial 13 and the dial holder 26 are rotated in the direction toward the first holding position.

By rotationally operating the dial 13 in the direction of arrow A2, i.e., in a direction toward the second holding position so as to engage the engagement projected portion 32 of the elastic engagement pawl 31 with the second engagement portion 12 again, the dial 13 and the dial holder 26 can be readily returned to the second holding position. Thus, by returning the dial 13 and the dial holder 26 to the second holding position, the pulley unit 50 can be assembled to the insulator 6 as described above.

Meanwhile, even when the dial 13 and the dial holder 26 overrun little in the direction of arrow A2 in a case where the dial 13 is rotationally operated in the direction of arrow A2, i.e., in the direction toward the second holding position, the engagement projected portion 32 of the elastic engagement pawl 31 can be returned to the original engagement position of the second engagement portion 12 by the inclined portion 12a of the second engagement portion 12 as shown by a double-dash line in Fig. 12. Accordingly, it is possible to prevent the engagement projected portion 32 of the elastic engagement pawl 31 from being left in a state in which the engagement projected portion 32 rides on the front face of the insulator 6 by coming off the second engagement portion 12.

### Description of Reference Numerals and Signs

- 1: body
- 6: insulator (base member)
- 11: first engagement portion
- 12: second engagement portion
- 13: dial
- 17: first stopper portion (stopper unit)
- 18: second stopper portion
- 26: dial holder
- 31: elastic engagement pawl
- 32: engagement projected portion
- 33: reception portion
- 34: first stopper portion (stopper unit)
- 35: second stopper portion
- 50: pulley unit
- 52: cable pulley (rotary unit)
- 55: coupling shaft section (engagement releasing section)

## Claims

1. An operating device comprising:
a base member (6);
a dial (13) that is provided on the base member so as to be rotationally operated around an axis direction of the dial;
a dial holder (26) that is coupled to the dial (13) so as to be rotated together with the dial (13);
a first engagement portion (11) and a second engagement portion (12) that are arranged on the base member (6) so as to be separated from each other along a rotational direction of the dial (13); **characterized in that**
an elastic engagement pawl (31) that is provided on the dial holder (26) and is elastically deformable, provisionally holds the dial holder (26) together with the dial (13) at a first holding position in a state that the elastic engagement pawl (31) is engaged with the first engagement portion (11), and holds the dial holder (26) together with the dial (13) at a second holding position in a state that the elastic engagement pawl (31) is engaged with the second engagement portion (12);
a stopper unit (17, 34) that is provided between the base member (6) and the dial holder (26) and restricts a rotation of the dial holder (26) in a direction (A1) toward the first holding position;
a rotary unit (52) that operates an operation target by its rotation when a rotation of the dial (13) is transmitted to the rotary unit (52) via the dial holder (26); and
an engagement releasing section (55) that is provided on the rotary unit (52) and elastically deforms the elastic engagement pawl (31) so as to release the engagement of the elastic engagement pawl (31) with the second engagement portion (12) when the rotary unit (52) is assembled to the dial holder (26) in a state that the dial holder (26) is positioned at the second holding position,
wherein in a case where the engagement of the elastic engagement pawl (31) with the second engagement portion (13) is released and the dial holder (26) is rotated in the direction toward the first holding position from a state that the dial holder (26) is positioned at the second holding position, the rotation of the dial holder (26) in the direction toward the first holding position is restricted by the stopper unit (17,34) and the elastic engagement pawl (31) is elastically deformed so that the elastic engagement pawl (31) is not able to be engaged with the first engagement portion (11).

2. The operating device according to claim 1, wherein in the case where the engagement of the elastic engagement pawl (31) with the second engagement portion (13) is released and the dial holder (26) is rotated in the direction toward the first holding position from the state that the dial holder (26) is positioned at the second holding position, the elastic engagement pawl (31) is elastically deformed so as to be inclined with respect to a face of the base member (6).

3. The operating device according to claim 1 or 2, wherein the elastic engagement pawl (31) is not elastically deformed in a state that the elastic engagement pawl (31) is engaged with the first engagement portion (11) at the first holding position.

4. The operating device according to any one of claims 1 to 3, wherein the stopper unit (34,17) has a first stopper portion (34) provided on the dial holder and a second stopper portion (17) provided on the base member (6); and
wherein the first stopper portion (34) is engaged with the second stopper portion (17) in a state that the elastic engagement pawl (31) is engaged with the first engagement portion (11) at the first holding position.

## Patentansprüche

1. Betätigungsvorrichtung, die umfasst:
ein Sockelelement (6);
einen Einstellring (13), der an dem Sockelelement so vorhanden ist, dass er drehend um eine Achsenrichtung des Einstellrings herum betätigt wird;
einen Einstellring-Halter (26), der mit dem Einstellring (13) so verbunden ist, dass er zusammen mit dem Einstellring (13) gedreht wird;
einen ersten Eingriffsabschnitt (11) und einen zweiten Eingriffsabschnitt (12), die an dem Sockelelement (6) so angeordnet sind, dass sie voneinander in einer Drehrichtung des Einstellrings (13) getrennt sind;
**dadurch gekennzeichnet, dass**
eine elastische Eingriffsklaue (31), die an dem Einstellring-Halter (26) vorhanden ist und elastisch verformt werden kann, den Einstellring-Halter (26) an einer ersten Halteposition zusammen mit dem Einstellring (13) vorläufig in einem Zustand hält, in dem die elastische Eingriffsklaue (31) mit dem ersten Eingriffsabschnitt (11) in Eingriff ist, und den Einstellring-Halter (26) an einer zweiten Halteposition zusammen mit dem Einstellring (13) in dem Zustand hält, in dem die elastische Eingriffsklaue (31) mit dem zweiten Eingriffsabschnitt (12) in Eingriff ist;
eine Anschlageinheit (17, 34), die zwischen dem Sockelelement (6) und dem Einstellring-Halter (26) vorhanden ist und eine Drehung des Einstellring-Halters (26) in einer Richtung (A1) auf die erste Halteposition zu einschränkt;
eine Dreheinheit (52), die ein Betätigungsobjekt mit ihrer Drehung betätigt, wenn eine Drehung des Einstellrings (13) über den Einstellring-Halter (26) auf die Dreheinheit (52) übertragen wird; und
einen Eingriffs-Löseabschnitt (55), der an der Dreheinheit (52) vorhanden ist und die elastische Eingriffsklaue (31) elastisch verformt, um den Eingriff der elastischen Eingriffsklaue (31) mit dem zweiten Eingriffsabschnitt (12) zu lösen, wenn die Dreheinheit (52) in einem Zustand, in dem sich der Einstellring-Halter (26) an der zweiten Halteposition befindet, an dem Einstellring-Halter montiert ist,
wobei, wenn der Eingriff der elastischen Eingriffsklaue (31) mit dem zweiten Eingriffsabschnitt (13) gelöst wird und der Einstellring-Halter (26) von einem Zustand, in dem sich der Einstellring-Halter (26) an der zweiten Halteposition befindet, auf die erste Halteposition zu gedreht wird, die Drehung des Einstellring-Halters (26) in der Richtung auf die erste Halteposition zu durch die Anschlageinheit (17, 34) eingeschränkt wird und die elastische Eingriffsklaue (31) elastisch so verformt wird, dass die elastische Eingriffsklaue (31) nicht mit dem ersten Eingriffsabschnitt (11) in Eingriff gebracht werden kann.

2. Betätigungsvorrichtung nach Anspruch 1, wobei, wenn der Eingriff der elastischen Eingriffsklaue (31) mit dem zweiten Eingriffsabschnitt (13) gelöst wird und der Einstellring-Halter (26) von dem Zustand, in dem sich der Einstellring-Halter (26) an der zweiten Halteposition befindet, auf die erste Halteposition zu gedreht wird, die elastische Eingriffsklaue (31) elastisch so verformt wird, dass sie in Bezug auf eine Stirnfläche des Sockelelementes (6) geneigt wird.

3. Betätigungsvorrichtung nach Anspruch 1 oder 2, wobei die elastische Eingriffsklaue (31) in einem Zustand, in dem die elastische Eingriffsklaue (31) an der ersten Halteposition in Eingriff mit dem ersten Eingriffsabschnitt (11) ist, elastisch nicht verformt wird.

4. Betätigungsvorrichtung nach einem der Ansprüche 1 bis 3, wobei die Anschlageinheit (34, 17) einen ersten Anschlagabschnitt (34), der an dem Einstellring-Halter vorhanden ist, und einen zweiten Anschlagabschnitt (17) aufweist, der an dem Sockelelement (6) vorhanden ist; und
wobei der erste Anschlagabschnitt (34) mit dem zweiten Anschlagabschnitt (17) in einem Zustand in Eingriff ist, in dem die elastische Eingriffsklaue (31) an der ersten Halteposition in Eingriff mit dem ersten Eingriffsabschnitt (11) ist.

## Revendications

1. Dispositif d'actionnement :
un élément de base (6) ;
un cadran (13) qui est prévu sur l'élément de base de façon à être actionné en rotation autour d'une direction d'axe du cadran ;
un support de cadran (26) qui est relié au cadran (13) de façon à être tourné avec le cadran (13) ;
une première partie d'engagement (11) et une deuxième partie d'engagement (12) qui sont prévues sur l'élément de base (6) de façon à être séparées l'une de l'autre le long d'une direction de rotation du cadran (13) ; **caractérisé en ce que**
un cliquet d'engagement élastique (31) qui est prévu sur le support de cadran (26) et est élastiquement déformable, maintient provisoirement le support de cadran (26) avec le cadran (13) dans une première position de maintien dans un état tel que le cliquet d'engagement élastique (31) est engagé avec la première partie d'engagement (11), et maintient le support de cadran (26) avec le cadran (13) dans une deuxième position de maintien dans un état tel que le cliquet d'engagement élastique (31) est engagé avec la deuxième partie d'engagement (12) ;
une unité de butée (17, 34) qui est prévue entre l'élément de base (6) et le support de cadran (26) et limite une rotation du support de cadran (26) dans une direction (A1) vers la première position de maintien ;
une unité rotative (52) qui actionne une cible d'actionnement grâce à sa rotation quand une rotation du cadran (13) est transmise à l'unité rotative (52) par l'intermédiaire du support de cadran (26) ; et
une section de libération d'engagement (55) qui est prévue sur l'unité rotative (52) et déforme élastiquement le cliquet d'engagement élastique (31) de façon à libérer l'engagement du cliquet d'engagement élastique (31) avec la deuxième partie d'engagement élastique (12) quand l'unité rotative (52) est assemblée sur le support de cadran (26) dans un état tel que le support de cadran (26) est positionné dans la deuxième position de maintien,
dans lequel, dans un cas où l'engagement du cliquet d'engagement élastique (31) avec la deuxième partie d'engagement (13) est libéré et le support de cadran (26) est tourné dans la direction vers la première position de maintien à partir d'un état tel que le support de cadran (26) est positionné dans la deuxième position de maintien, la rotation du support de cadran (26) dans la direction vers la première position de maintien est limitée par l'unité de butée (17,34) et le cliquet d'engagement élastique (31) est déformé élastiquement de telle sorte que le cliquet d'engagement élastique (31) ne peut pas être engagé avec la première partie d'engagement (11).

2. Dispositif d'actionnement selon la revendication 1, dans lequel, dans le cas où l'engagement du cliquet d'engagement élastique (31) avec la deuxième partie d'engagement (13) est libéré et le support de cadran (26) est tourné dans la direction vers la première position de maintien à partir de l'état tel que le support de cadran (26) est positionné dans la deuxième position de maintien, le cliquet d'engagement élastique (31) est élastiquement déformé de façon à être incliné par rapport à une face de l'élément de base (6).

3. Dispositif d'actionnement selon la revendication 1 ou 2, dans lequel le cliquet d'engagement élastique (31) n'est pas déformé élastiquement dans un état tel que le cliquet d'engagement élastique (31) est engagé avec la première partie d'engagement (11) dans la première position de maintien.

4. Dispositif d'actionnement selon l'une quelconque des revendications 1 à 3, dans lequel l'unité de butée (34, 17) a une première partie de butée (34) prévue sur le support de cadran et une deuxième partie de butée (17) prévue sur l'élément de base (6) ; et
la première partie de butée (34) étant engagée dans la deuxième partie de butée (17) dans un état tel que le cliquet d'engagement élastique (31) est engagé avec la première partie d'engagement (11) dans la première position de maintien.
